# EUROPEAN PATENT APPLICATION

(11) **EP 4 586 485 A1**
(43) Date of publication of application: **16.07.2025**
(21) Application number: 23861894.6
(22) Date of filing: 06.05.2023
(51) Int. Cl.: H02M 3/335, H02M 7/219, H02M 7/5387, H02M 1/088, H02M 1/00

(54) **CONTROL METHOD AND CONTROL CIRCUIT FOR BIDIRECTIONAL RESONANT DIRECT-CURRENT CONVERTER**

(30) Priority: 07.09.2022 CN 202211089204
(71) Applicant: Sungrow Power Supply Co., Ltd., Hefei, Anhui 230088 (CN)
(72) Inventor: LIU, Wei, Hefei, Anhui 230088 (CN); ZHUANG, Jiacai, Hefei, Anhui 230088 (CN); WANG, Tengfei, Hefei, Anhui 230088 (CN); PAN, Daidong, Hefei, Anhui 230088 (CN); XU, Jiangtao, Hefei, Anhui 230088 (CN); XU, Jun, Hefei, Anhui 230088 (CN)
(74) Representative: Zacco Norway AS
(86) International application number: PCT/CN2023/092456
(87) International publication number: WO 2024/051189

(57) **Abstract**

Provided in the present application are a control method and control circuit for a bidirectional resonant direct-current converter. In the control method, when the reversal of a secondary side resonant current is detected, corresponding switch tubes in a secondary side circuit are controlled to delay for a period of time before being switched off, which is different from the case in the conventional synchronous rectification technology where switching off is performed before reversal, such that it is possible to prevent anti-parallel diodes of these switch tubes from being switched on at a moment close to a zero crossing moment, thus avoiding the problems such as low-frequency oscillation caused when a switch tube having an anti-parallel diode with poor reverse recovery characteristic, such as a silicon MOSFET, is used as a rectifier tube; moreover, after switching off, the current is commutated to an anti-parallel diode or a body diode of a complementary switch tube in the same arm, i.e., commutated to an anti-parallel diode or a body diode of a switch tube that needs to be switched on in a half cycle, such that after the dead time, controlling these switch tubes needing to be switched on to be switched on can realize zero-voltage switching-on of the switch tubes.

## Description

This application claims priority to Chinese Patent Application No. 202211089204.8 titled "CONTROL METHOD AND CONTROL CIRCUIT FOR BIDIRECTIONAL RESONANT DIRECT-CURRENT CONVERTER", filed on September 7, 2022 with the China National Intellectual Property Administration (CNIPA), which is incorporated herein by reference in its entirety.

### FIELD

The present disclosure relates to the technical field of power electronics, and in particular to a control method and a control circuit for a bidirectional resonant direct-current converter.

### BACKGROUND

With the development of energy interconnection, energy exchange between different energy storage systems is becoming common, and bidirectional direct-current power conversion is gradually used for users and the market. An isolation system is generally provided between different energy systems, such as a bidirectional on-board power supply, or a bidirectional charging pile, in order to ensure safety. A commonly used bidirectional direct-current converter is of a DAB (dual active bridge) topology or a CLLC (capacitor-inductor-inductor-capacitor) topology. In the DAB topology, gain and power are controlled through phase shifting, while a soft switching range is limited, and a switching loss is large in a case of a battery voltage in a wide range. The CLLC topology is a resonant topology, in which gain and power are controlled through frequency modulation, achieving a high efficiency.

In a conventional CLLC resonant converter, a secondary switching transistor operates in a synchronous rectification state. If a switching frequency is greater than a resonant frequency, the switching transistors in the secondary circuit fail in ZCS (zero current switch), and anti-parallel diodes operate in a hard-off state. As a body diode of a high-voltage (greater than or equal to 650) silicon MOSFET (Metal-Oxide-Semiconductor Field-Effect Transistor) has a poor reverse recovery characteristic, hard off easily causes problems such as low-frequency oscillation, leading to abnormal operation of the circuit. Moreover, with the development of devices, SiC (silicon carbide) devices and GaN (gallium nitride) devices are applied increasingly. If current reversely flows through such device without drive, a conduction voltage of 3V or even higher is generated. Further, as the switching frequency increases, a proportion of a flowing duration of the reverse current in an entire switching cycle is increased, which produces a larger conduction loss in a synchronous rectification situation, increasing difficulty of heat dissipation for the device, resulting in a decrease in a system efficiency.

Therefore, how to develop a control solution to solve the above technical problem is urgently to be solved.

### SUMMARY

A control method and a control circuit for a bidirectional resonant direct-current converter, to avoid a problem of low-frequency oscillation of a diode and reduce a conduction loss.

The following technical solutions are provided according to the present disclosure for achieving the above objectives.

In a first aspect of the present disclosure, a control method for a bidirectional resonant direct-current converter is provided. The bidirectional resonant direct-current converter includes a transformer, a primary circuit, a secondary circuit, and a resonant tank provided between the transformer and the primary circuit and/or the secondary circuit; the primary circuit and the secondary circuit is a single-phase bridge arm circuit or a three-phase bridge arm circuit, and switching transistors in the single-phase bridge arm circuit or switching transistors in the three-phase bridge arm circuit each provided with an anti-parallel diode or a body diode.

The control method includes: determining a zero-crossing point of a secondary resonant current of the bidirectional resonant direct-current converter; determining, for a switching transistor to be turned off among the switching transistors in the secondary circuit within each half cycle of the secondary resonant current, a turn-off start time instant of the switching transistor as an end time instant of a preset delay duration starting from the zero-crossing point that is a start point of the half cycle; and determining, for a switching transistor to be turned on among the switching transistors in the secondary circuit within each half cycle of the secondary resonant current, a turn-on start time instant of the switching transistor as an end time instant of a dead time starting from the turn-off start time instant of a switching transistor complementary to the switching transistor to be turned on.

In an embodiment, the preset delay duration is less than a preset fixed value, and each of the switching transistors in the primary circuit is turned on at a zero voltage.

In an embodiment, the preset fixed value is equal to 10% of a switching cycle of the switching transistors in the primary circuit and the secondary circuit.

In an embodiment, before the determining a zero-crossing point of a secondary resonant current of the bidirectional resonant direct-current converter, the control method further includes: obtaining an input electrical parameter and/or an output electrical parameter of the bidirectional resonant direct-current converter; determining the preset delay duration as a preset fixed value; or, determining the preset delay duration by searching a table based on at least one of the input electrical parameter or the output electrical parameter.

In an embodiment, before the determining a zero-crossing point of a secondary resonant current of the bidirectional resonant direct-current converter, the control method further includes: determining a switching frequency of the primary circuit and the secondary circuit based on the input electrical parameter and/or the output electrical parameter and a preset reference signal; and generating a driving control signal of the primary circuit based on the switching frequency, and outputting the driving control signal of the primary circuit.

In an embodiment, after the determining a switching frequency of the primary circuit and the secondary circuit, the control method further includes: determining whether the switching frequency is greater than a resonant frequency of the resonant tank; and processing, in response to the switching frequency being greater than the resonant frequency, the process of determining a zero-crossing point of a secondary resonant current of the bidirectional resonant direct-current converter.

In an embodiment, after the determining whether the switching frequency is greater than a resonant frequency of the resonant tank, the control method further includes: in response to the switching frequency being less than or equal to the resonant frequency, processing the process of generating a driving control signal of the primary circuit based on the switching frequency, and outputting the driving control signal of the primary circuit; or processing the process of determining a zero-crossing point of a secondary resonant current of the bidirectional resonant direct-current converter.

In an embodiment, the preset delay duration is less than a preset fixed value, and each of the switching transistors in the primary circuit is turned on at a zero voltage.

In an embodiment, each of the primary circuit and the secondary circuit is the single-phase bridge arm circuit, a switching transistor of one half-bridge arm in a bridge arm is complementary to a switching transistor of the other half-bridge arm in the bridge arm, and switching transistors of half-bridge arms at different positions in different bridge arms are turned on or off simultaneously.

In an embodiment, an input electrical parameter and/or an output electrical parameter includes at least one of: an input current, an input voltage, an output current and an output voltage.

In an embodiment, the determining the preset delay duration by searching a table based on at least one of the input electrical parameter or the output electrical parameter includes: determining the preset delay duration based on the output current and the output voltage.

In a second aspect of the present disclosure, a control circuit for a bidirectional resonant direct-current converter is provided. The bidirectional resonant direct-current converter includes a transformer, a primary circuit, a secondary circuit, and a resonant tank provided between the transformer and the primary circuit and/or the secondary circuit; each of the primary circuit and the secondary circuit is a single-phase bridge arm circuit or a three-phase bridge arm circuit, and switching transistors in the single-phase bridge arm circuit or switching transistors in the three-phase bridge arm circuit each provided with an anti-parallel diode or a body diode. The control circuit includes: a primary driving circuit, a secondary driving circuit, a zero-crossing detection circuit, a control module, and an input sampling circuit and/or an output sampling circuit.

The input sampling circuit is configured to sample an input electrical parameter of the bidirectional resonant direct-current converter, and the output sampling circuit is configured to sample an output electrical parameter of the bidirectional resonant direct-current converter.

The zero-crossing detection circuit is configured to detect whether a current flowing through the resonant tank crosses zero, and generate a zero-crossing signal.

The control module is configured to receive the zero-crossing signal and the input electrical parameter and/or the output electrical parameter, perform the control method for a bidirectional resonant direct-current converter according to any embodiment of the first aspect, turn on or off the switching transistors in the primary circuit through the primary driving circuit, and turn on or off the switching transistors in the secondary circuit through the secondary driving circuit.

In an embodiment, for detecting whether a current flowing through the resonant tank crosses zero, the zero-crossing detection circuit is configured to: determine the zero-crossing point of the secondary resonant current and/or whether a primary resonant current of the bidirectional resonant direct-current converter crosses zero.

In an embodiment, the input sampling circuit is configured to sample an input current and an input voltage at a direct-current side of the primary circuit; and the output sampling circuit is configured to sample an output current and an output voltage at a direct-current side of the secondary circuit.

In an embodiment, the resonant tank includes at least one resonant inductor module and at least one resonant capacitor module. The at least one resonant inductor module and the at least one resonant capacitor module are individually arranged on a primary side and a secondary side of the transformer or are both arranged on one side of the transformer, in response to the at least one resonant inductor module and the at least one resonant capacitor module each being in a quantity of one. The at least one resonant inductor module is arranged both on the primary side and the secondary side of the transformer, in response to the at least one resonant inductor module being in a quantity of more than one. The at least one resonant capacitor module is arranged on both the primary side and the secondary side of the transformer, in response to the at least one resonant capacitor module being in a quantity of more than one.

With the control method for a bidirectional resonant direct-current converter according to the present disclosure, the zero-crossing point of the secondary resonant current of the bidirectional resonant direct-current converter is determined, for a switching transistor to be turned off in the secondary circuit within each half cycle of the secondary resonant current, a turn-off start time instant of the switching transistor is determined as an end time instant of a preset delay duration starting from the zero-crossing point that is a start point of the half cycle. That is, on detection of commutation of the secondary resonant current, the switching transistor in the secondary circuit is turned off immediately after the delay duration, which is different from the conventional synchronous rectification technology where the switching transistor is turned off before the commutation, preventing the anti-parallel diodes of the switching transistors from being turned on at a time instant close to the zero-crossing point, thereby avoiding a problem of low-frequency oscillation due to a switching transistor, such as a silicon MOSFET serving as a rectifier transistor, with an anti-parallel diode having poor reverse recovery characteristic. In addition, after the switching transistor is turned off, the current is transferred to an anti-parallel diode or body diode of another switching transistor complementary to the switching transistor in the same bridge arm, that is, transferred to the anti-parallel diode or body diode of the switching transistor to be turned on within the half cycle. Therefore, the switching transistor to be turned on is turned on immediately after the dead time, so that the complementary switching transistor is turned on at a zero voltage. The control method in the present disclosure effectively reduces the flowing duration of the reverse current, so that the reverse current only flows within the dead time where no switching transistor is turned on, achieving a significant efficiency advantage in synchronous rectification applications of SiC devices and GaN devices.

### BRIEF DESCRIPTION OF THE DRAWINGS

In order to more clearly illustrate technical solutions in embodiments of the present disclosure or in the conventional technology, the drawings to be used in the description of the embodiments or the conventional technology are briefly described below. Apparently, the drawings in the following description show only some embodiments of the present disclosure, and other drawings may be obtained by those skilled in the art from the drawings without any creative effort.
FIG. 1 is a circuit diagram of a CLLC resonant converter according to a conventional technology;
FIG. 2 is a diagram showing signal waveforms based on a conventional synchronous rectification technology;
FIG. 3 is a schematic structural diagram of a bidirectional resonant direct-current converter and a control circuit for the bidirectional resonant direct-current converter according to an embodiment of the present disclosure;
FIG. 4a is a schematic structural diagram of a resonant tank according to an embodiment of the present disclosure;
FIG. 4b is a schematic structural diagram of a resonant tank according to another embodiment of the present disclosure;
FIG. 4c is a schematic structural diagram of a resonant tank according to another embodiment of the present disclosure;
FIG. 4d is a schematic structural diagram of a resonant tank according to another embodiment of the present disclosure;
FIG. 4e is a schematic structural diagram of a resonant tank according to another embodiment of the present disclosure;
FIG. 5a is a schematic structural diagram illustrating a circuit of a bidirectional resonant direct-current converter and a control circuit for the bidirectional resonant direct-current converter according to an embodiment of the present disclosure;
FIG. 5b is a circuit diagram of a bidirectional resonant direct-current converter according to another embodiment of the present disclosure;
FIG. 6 is a flow chart of a control method for a bidirectional resonant direct-current converter according to an embodiment of the present disclosure;
FIG. 7a is a waveform diagram illustrating some signals based on a control method for a bidirectional resonant direct-current converter according to an embodiment of the present disclosure;
FIG. 7b is a waveform diagram illustrating some signals based on a control method for a bidirectional resonant direct-current converter according to an embodiment of the present disclosure; and
FIG. 8 is a flow chart of a control method for a bidirectional resonant direct-current converter according to another embodiment of the present disclosure.

### DETAILED DESCRIPTION

Technical solutions of embodiments of the present disclosure are described clearly and completely below in conjunction with the drawings of the embodiments of the present disclosure. Apparently, the embodiments described below are only some embodiments, rather than all the embodiments of the present disclosure. Any other embodiments obtained by those skilled in the art based on the embodiments of the present disclosure, without any creative effort, shall fall within the protection scope of the present disclosure.

In the present disclosure, terms of "include", "comprise" or any other variants are intended to be non-exclusive. Therefore, a process, method, article or device including a series of elements includes not only the elements but also other elements that are not enumerated, or further includes the elements inherent for the process, method, article or device. Unless expressively limited otherwise, the statement "comprising (including) one..." does not exclude existence of other similar elements in the process, method, article or device.

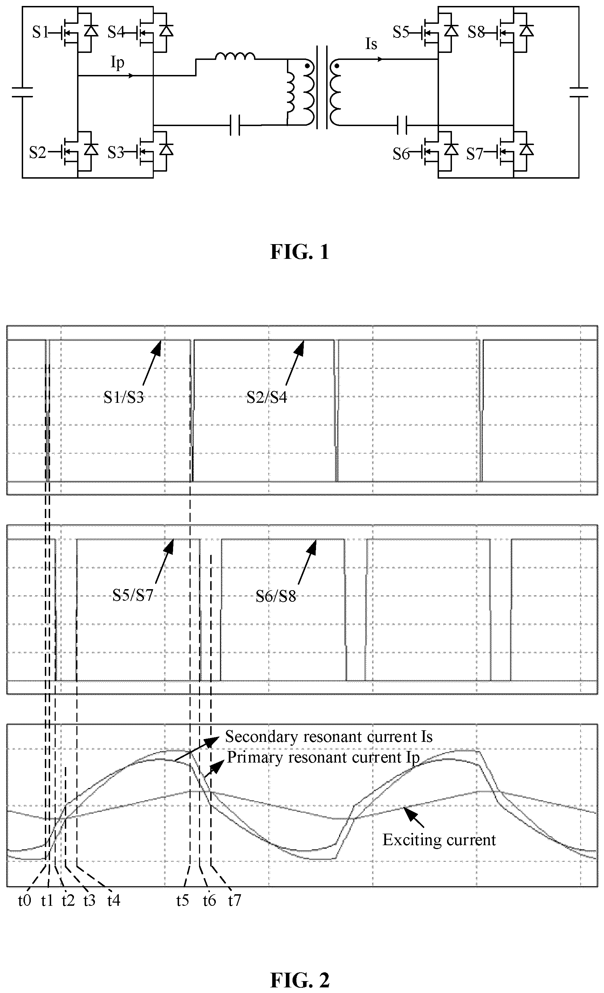

FIG. 1 is a schematic diagram of a CLLC resonant converter. In FIG. 1, switching transistors S1 to S4 are in a primary circuit, switching transistors S5 to S8 are in a secondary circuit, Ip represents a primary resonant current, and Is represents a secondary resonant current. FIG. 2 is a diagram showing signal waveforms based on a conventional synchronous rectification technology for the converter. As shown in FIG. 2, in the primary circuit, the switching transistors S1 and S3 have a same driving signal, and the switching transistors S2 and S4 have a same driving signal. In the secondary circuit, the switching transistors S5 and S7 have a same driving signal, and the switching transistors S6 and S8 have a same driving signal. In order to reduce a conduction loss, each of the switching transistors S5 to S8 in the secondary circuit operates in a synchronous rectification state, and has a turn-on time less than a turn-on time of an anti-parallel diode (or body diode) of the switching transistor. The secondary resonant current Is is zero at a time instant t3. The driving signal is used to turn on the switching transistors S5 and S7 in the secondary circuit at a time instant t4 and is used to turn off the switching transistors S5 at a time instant t6. At the time instant t6, the secondary resonant current Is is still greater than zero. The anti-parallel diode is turned on within an interval between the time instants t3 and t4 and within an interval between time instants t6 and time t7.

The switching transistors in the secondary circuit of the CLLC resonant converter operate in the synchronous rectification state. Therefore, if a switching frequency is greater than a resonant frequency, the switching transistors in the secondary circuit fail in ZCS, and the anti-parallel diodes operate in a hard-off state. As a body diode of a high-voltage (greater than or equal to 650) silicon MOSFET has a poor reverse recovery characteristic, hard off easily causes problems such as low-frequency oscillation, leading to abnormal operation of the circuit. Moreover, for SiC devices and GaN devices, if current reversely flows through such device without drive, a conduction voltage of 3V or even higher is generated. Further, as the switching frequency increases, a proportion of time of reverse current in an entire switching cycle is increased, which produces a large conduction loss in a synchronous rectification situation, increasing difficulty of heat dissipation for the device, resulting in a decrease in a system efficiency.

FIG. 1 exemplarily illustrates a CLLC-type single-phase resonant converter. In practice, the above problems exist in a LLC-type single-phase resonant converter, a SRC (series resonance)-type single-phase resonant converter, CLLC-type, LLC-type and SRC-type three-phase resonant converters. Therefore, a control method for a bidirectional resonant direct-current converter is provided according to the present disclosure, to solve the problem of low-frequency oscillation of a diode and reduce the conduction loss.

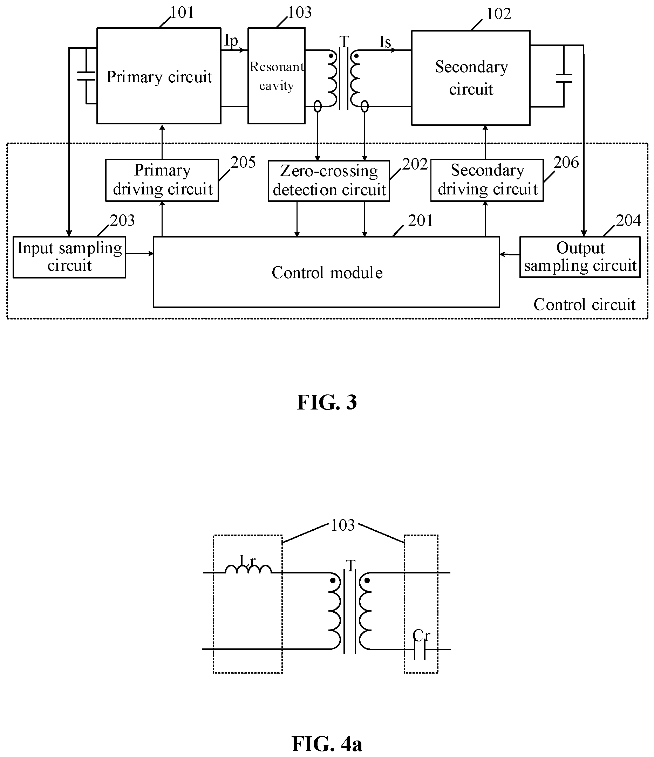

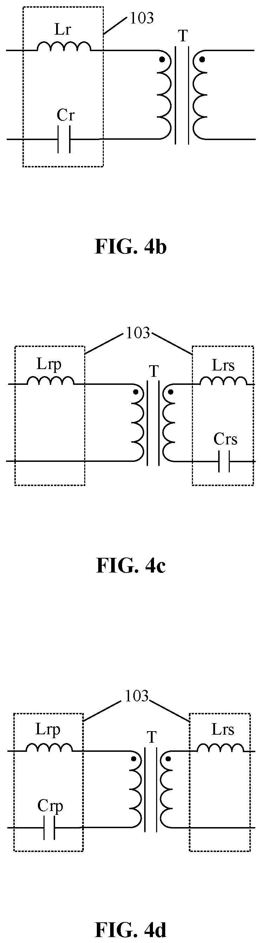

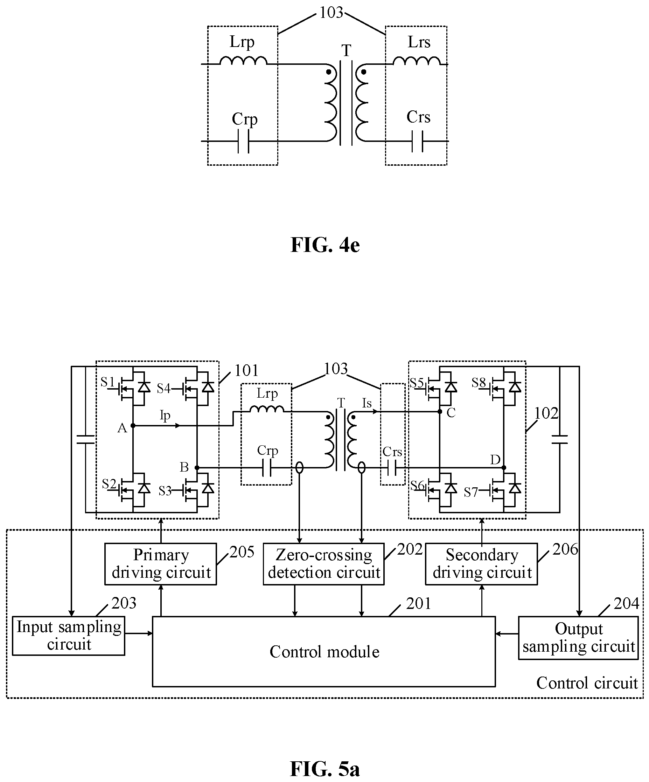

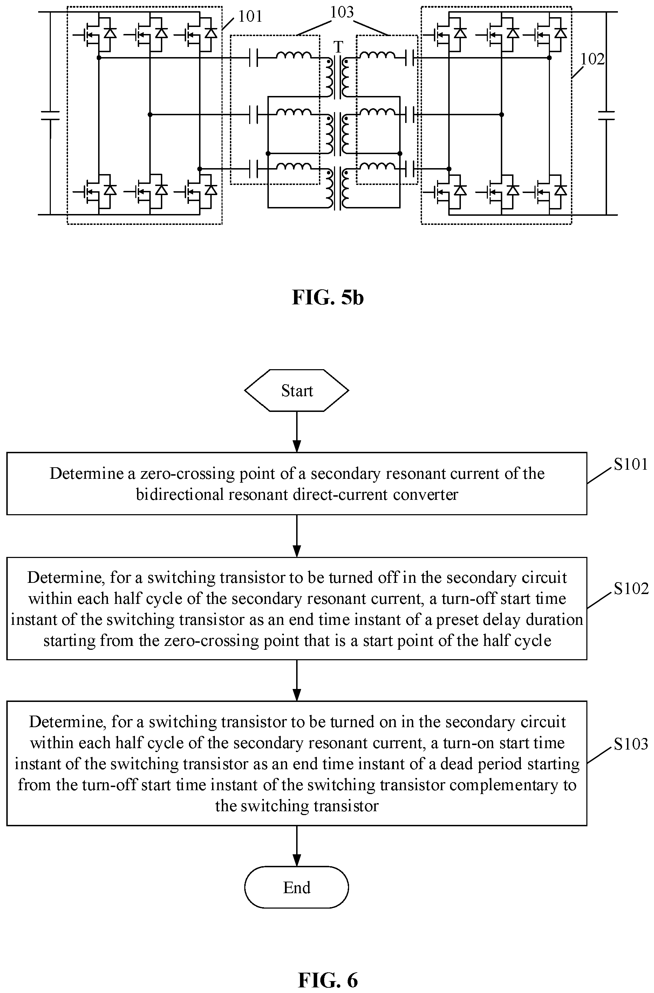

As shown in FIG. 3, the bidirectional resonant direct-current converter includes a transformer T, a primary circuit 101, a secondary circuit 102, and a resonant tank 103 provided between the transformer T and the primary circuit 101 and/or the secondary circuit 102. FIG. 3 exemplarily illustrates that the resonant tank 103 is provided between the transformer T and the primary circuit 101. In practice, the resonant tank 103 is provided between the transformer T and the secondary circuit 102. Alternatively, resonant elements in the resonant tank 103 are arranged on both sides of the transformer T. In an embodiment, the resonant tank 103 includes at least one resonant inductor module and at least one resonant capacitor module. In a case where the resonant inductor module Lr and the resonant capacitor module Cr each are in a quantity of one, the resonant inductor module Lr and the resonant capacitor module Cr are individually arranged on a primary side and a secondary side of the transformer T (as shown in FIG. 4a), or are arranged on a same side of the transformer T (as shown in FIG. 4b). In a case where the resonant inductor module is in a quantity of more than one, the resonant inductor modules are arranged on both the primary side and the secondary side of the transformer T (shown as Lrp and Lrs in FIG. 4c, FIG. 4d and FIG. 4e). In a case where the resonant capacitor module is in a quantity of more than one, the resonant capacitor modules are arranged on both the primary side and the secondary side of the transformer T (shown as Crp and Crs in FIG. 4e and FIG. 5a). A situation where the resonant tank 103 includes two resonant capacitor modules Crp and Crs and one resonant inductor module Lrs arranged on the secondary side is not shown in a figure. All implantations fall within the protection scope of the present disclosure. Moreover, each of the primary circuit 101 and the secondary circuit 102 is a single-phase arm circuit (as shown in FIG. 5a) or a three-phase bridge arm circuit (as shown in FIG. 5b). Each switching transistor in the single-phase bridge arm circuit or three-phase bridge arm circuit has an anti-parallel diode or a body diode. In a case where each of the primary circuit 101 and the secondary circuit 102 is the three-phase bridge arm circuit, arrangement of the transformer T and the resonant tank 103 between the primary circuit and the secondary circuit may be referred to the conventional technology. What shown in FIG. 5b is only one example and the arrangement is not limited thereto. That is, the bidirectional resonant direct-current converter may be implemented as a CLLC-type, LLC-type or SRC-type single-phase or three-phase resonant converter in the conventional technology. Detailed structures and connection relationships of the bidirectional resonant direct-current converter may be referred to the conventional technology and are not described in detail here.

Regardless of the topology of the bidirectional resonant direct-current converter, the control method for the bidirectional resonant direct-current converter may be referred to FIG. 6. The control method includes the following S101 to S103.

In S101, a zero-crossing point of a secondary resonant current of the bidirectional resonant direct-current converter is determined.

In an embodiment, a primary resonant current Ip and/or a secondary resonant current Is of the bidirectional resonant direct-current converter is detected by a zero-crossing detection circuit 202 shown in FIG. 3. The zero-crossing point of the secondary resonant current Is is determined by a control module 201 based on a detection result of the zero-crossing detection circuit 202. In practices, the transformer T has large magnetic inductance, a zero-crossing point of the primary resonant current Ip is slightly different from a zero-crossing point of the secondary resonant current Is. In this case, only one side of the transformer T is provided with a detection circuit for zero-crossing detection, to save costs. In an embodiment, only the zero-crossing point of the secondary resonant current Is is detected.

Then, S102 and S103 are performed.

In S102, for a switching transistor to be turned off in the secondary circuit within each half cycle of the secondary resonant current, a turn-off start time instant of the switching transistor is determined as an end time instant of a preset delay duration starting from the zero-crossing point that is a start point of the half cycle.

The preset delay duration may be a preset fixed value, or may be determined by searching a table based on an input electrical parameter and/or output electrical parameter of the bidirectional resonant direct-current converter. For example, a table of the delay time period related to an output voltage, a load condition and other operating conditions of the bidirectional resonant direct-current converter may be preset, and then the preset delay duration is determined by searching the table. Values of various parameters in the table are obtained through experiments according to actual situations and not limited here. A method of determining the preset delay duration may depend on an application environment. All implementations fall within the protection scope of the present disclosure.

Different from the synchronous rectification control of the secondary circuit shown in FIG. 2, for the resonant direct-current converters with various topologies mentioned above, in the embodiment, as long as the secondary resonant current crosses zero, a turn-off start time instant of the switching transistor to be turned off in the secondary circuit is determined as a time instant when the preset delay duration starting from the zero-crossing point expires.

In S103, for a switching transistor to be turned on in the secondary circuit within each half cycle of the secondary resonant current, a turn-on start time instant of the switching transistor is determined as an end time instant of a dead time starting from the turn-off start time instant of the switching transistor complementary to the switching transistor to be turned on.

That is, the complementary switching transistor in the secondary circuit, that is, the switching transistor to be turned on in the secondary circuit is turned on immediately after the dead time starting from the turn-off start time instant.

Further illustration is provided through an example of a CLLC-type single-phase resonant converter as shown in FIG. 5a. In this case, the primary circuit 101 and the secondary circuit 102 are both single-phase bridge arm circuits. For the two single-phase bridge arm circuits, a switching transistor of one half-bridge arm in a bridge arm is complementary to a switching transistor of the other half-bridge arm in the bridge arm, and switching transistors of half-bridge arms at different positions in different bridge arms are turned on or off simultaneously. In an embodiment, the primary circuit 101 includes a first bridge arm and a second bridge arm connected in parallel to each other. The first bridge arm is formed by a first switching transistor S1 and a second switching transistor S2 connected in serial. Drives of the first switching transistor S1 and the second switching transistor S2 are complementary to each other and are equal to 50%. The second bridge arm is formed by a third switching transistor S3 and a fourth switching transistor S4 connected in serial. Drives of the third switching transistor S3 and the fourth switching transistor S3 are complementary to each other and are equal to 50%. In addition, driving signals of the first switching transistor S1 and the third switching transistor S3 are the same. A first node A is between the first switching transistor S1 and the second switching transistor S2, and a second node B is between the third switching transistor S3 and the fourth switching transistor S4. Resonant elements (Lrp and Crp) on the primary side and a primary winding of the transformer T are connected between the two nodes. The secondary circuit 102 includes a third bridge arm and a fourth bridge arm connected in parallel to each other. The third bridge arm is formed by a fifth switching transistor S5 and a sixth switching transistor S6 connected in serial. Drives of the fifth switching transistor S5 and the sixth switching transistor S6 are complementary to each other and are equal to 50%. The fourth bridge arm is formed by a seventh switching transistor S7 and an eighth switching transistor S8 connected in serial. Drives of the seventh switching transistor S7 and the eighth switching transistor S8 are complementary to each other and are equal to 50%. In addition, driving signals of the fifth switching transistor S5 and the seventh switching transistor S7 are the same. A third node C is between the fifth switching transistor S5 and the sixth switching transistor S6, and a fourth node D is between the seventh switching transistor S7 and the eighth switching transistor S8. A resonant element (Crs) on the secondary side and a secondary winding of the transformer T are connected between the two nodes.

Upon detecting the zero-crossing point of the secondary resonant current, the zero-crossing detection circuit 202 generates a zero-crossing signal and transmits the zero-crossing signal to the control module 201. The control module 201 determines the zero-crossing point as a start point of a preset delay duration dt, and the secondary driving circuit 206 transmits the driving signal to the third bridge arm and the fourth bridge arm of the secondary circuit 102 if the preset delay duration expires. The preset delay durations for the two bridge arms are the same.

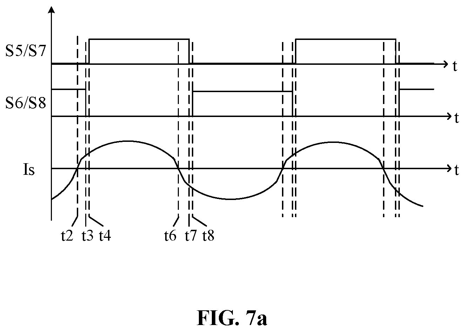

As shown in FIG. 7a, an interval from t2 to t6 indicates a positive half cycle of the secondary resonant current Is. The time instant t2 is the zero-crossing point corresponding to the start point of the positive half cycle of the secondary resonant current Is. The zero-crossing point of the secondary resonant current Is is detected at the time instant t2. After the preset delay duration dt, the sixth switching transistor S6 and the eighth switching transistor S8 in the secondary circuit 102 are turned off at a time instant t3. Then, after the dead time, the fifth switching transistor S5 and the seventh switching transistor S7 are turned on at a time instant t4. The sixth switching transistor S6 and the eighth switching transistor S8 are kept on before the time instant t3. Within an interval from t3 to t4, based on a direction of the current, the anti-parallel diodes of the fifth switching transistor S5 and the seventh switching transistor S7 are turned on. After the time instant t4, the fifth switching transistor S5 and the seventh switching transistor S7 are turned on at a zero voltage. The anti-parallel diodes of the sixth switching transistor S6 and the eighth switching transistor S8 are not turned on close to the time instant t2, thus avoiding the problem of reverse recovery of the anti-parallel diodes. The time instant t6 is a zero-crossing point corresponding to a start point of the negative half cycle of the secondary resonant current Is. The on/off control of each switching transistor in the secondary circuit 102 within the negative half cycle may be deduced similarly and is not described here.

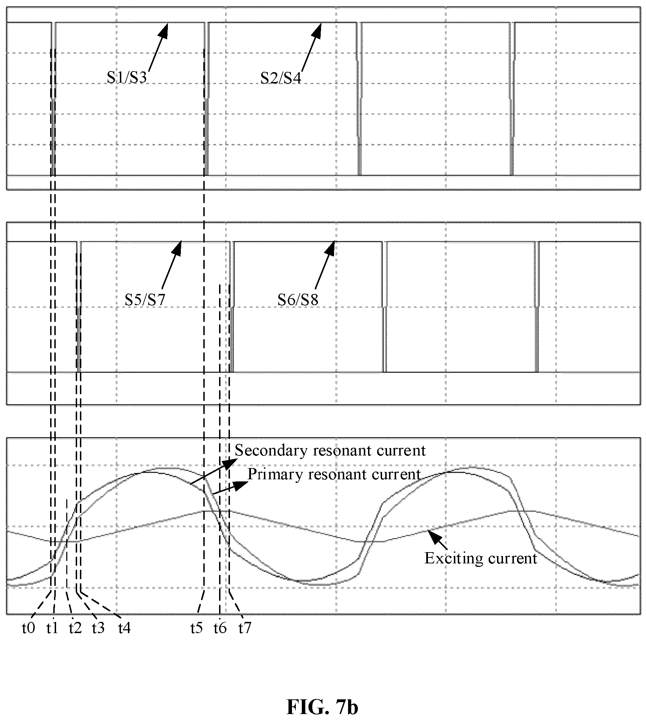

A resonant topology can generally achieve zero-voltage turn-on of the primary side. In order to retain this beneficial characteristic, in an embodiment, the preset delay duration dt is less than a preset fixed value. Generally, the preset delay duration is less than 10% of a switching cycle of the switching transistors in the primary circuit 101 and the secondary circuit 102, as shown in FIG. 7b.

Reference is made to FIG. 7b. The second switching transistor S2 and the fourth switching transistor S4 in the primary circuit 101 are turned off at a time instant t0, and the first switching transistor S1 and the third switching transistor S3 in the primary circuit 101 are turned on at a time instant t1. The zero-crossing detection circuit 202 detects that the secondary resonant current Is is zero at the time instant t2. The sixth switching transistor S6 and the eighth switching transistor S8 in the secondary circuit 102 are turned off at the time instant t3 when the preset delay duration dt expires. The fifth switching transistor S5 and the seventh switching transistor S7 in the secondary circuit 102 are turned on at the time instant t4, where t3-t2=dt.

As can be seen from FIG. 7b, the switching frequency is greater than the resonant frequency, and a resonant current phase lags behind a voltage phase. Therefore, when each switching transistor in the primary circuit 101 is turned on or off, the primary resonant current Ip does not cross zero (i.e., at the time instant t0). After the second switching transistor S2 is turned off, the primary resonant current Ip is transferred from the second switching transistor S2 to an anti-parallel diode of the first switching transistor S1. At the time instant t1, the first switching transistor S1 is turned on, thus achieving zero-voltage turn-on of the first switching transistor S1, i.e., soft switching. The soft switching of other switching transistors in the primary circuit 101 is implemented in a same manner as that of the first switching transistor S1. For the secondary circuit 102, the secondary resonant current Is has been commutated at the time instant t3. The current in the secondary circuit 102 is transferred from the sixth switching transistor S6 to the anti-parallel diode of the fifth switching transistor S5 after the sixth switching transistor S6 is turned off. At the time instant t4, the fifth switching transistor S5 is turned on, thus achieving zero-voltage turn-on of the fifth switching transistor S5, i.e., soft switching. The soft switching of other switching transistors in the secondary circuit 102 is implemented in a same manner as that of the fifth switching transistor S5.

It can be seen from the above analysis, zero-voltage turn-on of each of the switching transistor on the primary side and the secondary side is achieved. For each of the switching transistors on the primary side or secondary side, reverse current only flows within a dead time in which a switching transistor complementary to the switching transistor is turned off and the switching transistor is not turned on. Other time instants, there is always a turn-on switching transistor. Therefore, the reverse current flows within the dead time in which no switching transistor is turned on. In practice, a flowing duration of the reverse current is controlled by reasonably determining the dead time in which no switching transistor is turned on, thus reducing the reverse conduction voltage drop, and reducing a conduction loss.

With the control method for a bidirectional resonant direct-current converter according to the present disclosure, upon detecting commutation of the secondary resonant current, the switching transistor in the secondary circuit is turned off immediately after a delay duration, which is different from the conventional synchronous rectification technology where the switching transistor is turned off before the commutation, preventing the anti-parallel diodes of the switching transistors from being turned on at a time instant close to the zero-crossing point, thereby avoiding a problem of low-frequency oscillation due to a switching transistor, such as a silicon MOSFET serving as a rectifier transistor, with an anti-parallel diode having poor reverse recovery characteristic. In addition, after the switching transistor is turned off, the current is transferred to an anti-parallel diode or body diode of another switching transistor complementary to the switching transistor in the same bridge arm, that is, transferred to the anti-parallel diode or body diode of the switching transistor to be turned on within the half cycle. Therefore, the switching transistor to be turned on is turned on immediately after the dead time, so that the complementary switching transistor is turned on at a zero voltage. The control method in the present disclosure effectively reduces the flowing duration of the reverse current, so that the reverse current only flows within the dead time where no switching transistor is turned on, achieving a significant efficiency advantage in synchronous rectification applications of SiC devices and GaN devices.

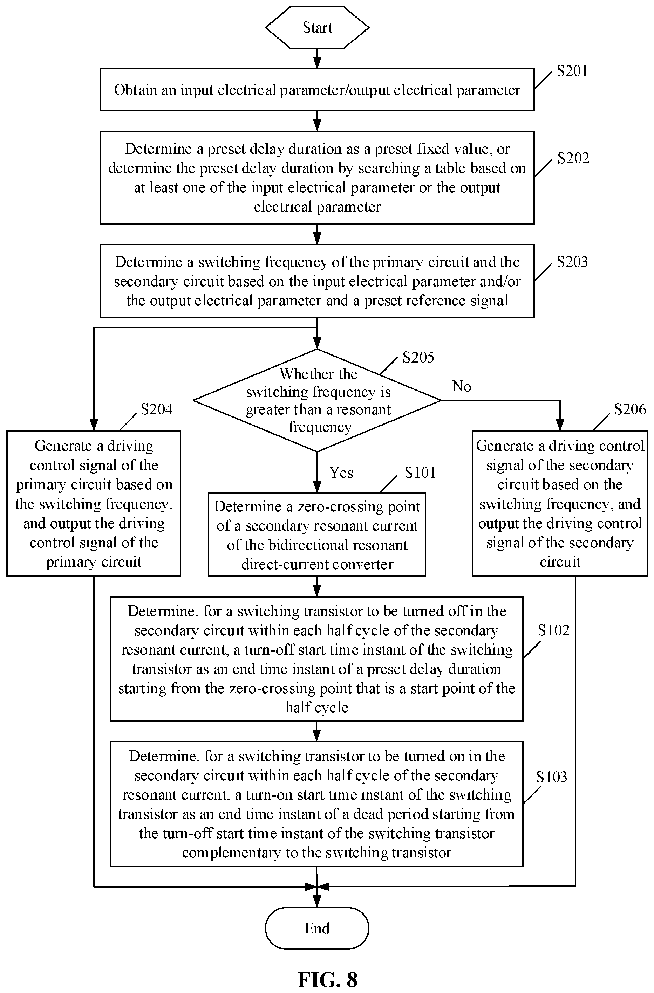

Based on the above embodiment, another control method for the bidirectional resonant direct-current converter is further provided according to an embodiment. As shown in FIG. 8, before step S101, the control method further includes S201 to S206.

In S201, an input electrical parameter and/or output electrical parameter is obtained.

The input electrical parameter and/or output electrical parameter may include at least one of: an input current, an input voltage, an output current and an output voltage of the bidirectional resonant direct-current converter. In practice, an input current and an input voltage at the direct-current side of the primary circuit 101, that is, the input current and the input voltage of the bidirectional resonant direct-current converter, may be sampled by the input sampling circuit 203 as shown in FIG. 3, and an output current and an output voltage at the direct-current side of the secondary circuit 102, that is, the output current and the output voltage of the bidirectional resonant direct-current converter, may be sampled by the output sampling circuit 204 as shown in FIG. 3.

In S202, the preset delay duration is determined as a preset fixed value, or the preset delay duration is determined by searching a table based on at least one of the input electrical parameter or the output electrical parameter.

For the determining the preset delay duration by searching the table based on the input electrical parameter and/or output electrical parameter, the preset delay duration may be determined based on the output current and the output voltage of the bidirectional resonant direct-current converter.

The control method may further include step S203 before step S101.

In S203, a switching frequency of the primary circuit and the secondary circuit is determined based on the input electrical parameter and/or the output electrical parameter and a preset reference signal.

The control method may proceed to S204 after the switching frequency is determined through step S203.

In S204, a driving control signal of the primary circuit is generated based on the switching frequency, and the driving control signal of the primary circuit is outputted.

In practice, an order of steps S202 and S203 is not limited, and steps S202 and S203 may be performed sequentially or in parallel, depending on an application environment. All implementations fall within the protection scope of the present disclosure.

Furthermore, the control method further includes step S205 after the step S203.

In S205, it is determined whether the switching frequency is greater than a resonant frequency of the resonant tank.

The method proceeds to step S101 in response to the switching frequency being greater than the resonant frequency.

In response to the switching frequency being less than or equal to the resonant frequency, the method may proceed to step S101 (not shown), or may proceed to step S206 (as shown in FIG. 8).

In S206, a driving control signal of the secondary circuit is generated based on the switching frequency, and the driving control signal is outputted.

That is, in a case where the switching frequency is less than or equal to the resonant frequency of the resonant element in the resonant tank, the secondary rectifier bridge arm may perform step S206 according to the conventional synchronous rectification method, that is, the switching transistor to be turned on is turned on after the secondary resonant current Is crosses zero and the switching transistor is turned off before the secondary resonant current Is crosses zero. Alternatively, with the control method in the above embodiment, that is, a corresponding switching transistor is turned on immediately after the preset delay duration dt and the dead time starting from the zero-crossing point of the secondary resonant current Is, and the switching transistor is turned off immediately after the preset delay duration dt starting from a next zero-crossing point.

In other words, an entire control method for the bidirectional resonant direct-current converter includes as follows.
(1) The input sampling circuit 203 samples an input voltage and an input current of the bidirectional resonant direct-current converter, and the output sampling circuit 204 samples an output voltage and an output current of the bidirectional resonant direct-current converter, and sampled signals are transmitted to the control module 201, so that the control module 201 obtains the input electrical parameter and/or output electrical parameter.
(2) The preset delay duration of the secondary circuit 102 is the preset fixed value or is determined by searching a table. For searching the table, the control module 201 determines the preset delay duration dt of the rectifier bridge arm by searching the table based on one or more signals of the voltage and current sampled by the sampling circuits.
(3) The control module 201 generates the switching frequency of the primary circuit and the secondary circuit based on the sampled signal and the internal preset reference signal. Each switching transistor in the primary circuit 101 operates directly at the switching frequency generated by the control module 201.
(4) The zero-crossing detection circuit 202 detects the primary resonant current Ip and/or the secondary resonant current Is. In an embodiment, the zero-crossing detection circuit 202 detects a secondary rectified current (that is, the secondary resonant current Is). Upon detecting the zero-crossing point, the zero-crossing detection circuit 202 outputs a zero-crossing signal to the control module 201, so that the control module 201 can determine that the secondary resonant current Is crosses zero and obtain the zero-crossing point of the secondary resonant current Is.
(5) Upon receiving the zero-crossing signal, the control module 201 outputs a driving control signal for turning on or off the third bridge arm and the fourth bridge arm immediately after the preset delay duration dt.
(6) The control module 201 generates a driving control signal for the primary circuit 101 and a driving control signal for the secondary circuit 102. A primary driving circuit 205 generates driving signals for the primary circuit 101 based on the driving control signal for the primary circuit 101, to control operation of the switching transistors in the primary circuit 101. A secondary driving circuit 206 generates driving signals for the secondary circuit 102 based on the driving control signal for the secondary circuit 102, to control operation of switching transistors in the secondary circuit 102.

It should be noted that the above control method is for a situation where the bidirectional resonant direct-current converter transmits power from the primary side to the secondary side. The control method for a situation where power is transmitted from the secondary side to the primary side is the same as that of situation where the power is transmitted from the primary side to the secondary side, which may be regarded as exchanging the names of the primary side and the secondary side. That is, the method is implemented under a condition that a power incoming side is referred to as the primary side and a power outgoing side is referred to as the secondary side. Such implementation is not described in detail here. All implementations fall within the protection scope of the present disclosure.

According to another embodiment of the present disclosure, a control circuit for a bidirectional resonant direct-current converter is further provided, as shown in FIG. 3 and FIG. 5a. The bidirectional resonant direct-current converter includes a transformer T, a primary circuit 101, a secondary circuit 102, and a resonant tank 103 provided between the transformer T and the primary circuit 101 and/or the secondary circuit 102. FIG. 3 exemplarily illustrates that the resonant tank 103 is provided between the transformer T and the primary circuit 101. In practice, the resonant tank 103 is provided between the transformer T and the secondary circuit 102. Alternatively, resonant elements in the resonant tank 103 are arranged on both sides of the transformer T. In an embodiment, the resonant tank 103 includes at least one resonant inductor module and at least one resonant capacitor module. In a case where the resonant inductor module Lr and the resonant capacitor module Cr each are in a quantity of one, the resonant inductor module Lr and the resonant capacitor module Cr are individually arranged on a primary side and a secondary side of the transformer T (as shown in FIG. 4a), or are arranged on a same side of the transformer T (as shown in FIG. 4b). In a case where the resonant inductor module is in a quantity of more than one, the resonant inductor modules are arranged on both the primary side and the secondary side of the transformer T (shown as Lrp and Lrs in FIG. 4c, FIG. 4d and FIG. 4e). In a case where the resonant capacitor module is in a quantity of more than one, the resonant capacitor modules are arranged on both the primary side and the secondary side of the transformer T (shown as Crp and Crs in FIG. 4e and FIG. 5a). A situation where the resonant tank 103 includes two resonant capacitor modules Crp and Crs and one resonant inductor module Lrs arranged on the secondary side is not shown in a figure. All implantations fall within the protection scope of the present disclosure. In practice, the number and position of the resonant inductor module and the resonant capacitor module may be modified as needs. Moreover, the resonant inductor module is generally implemented by one inductor, or may be implemented by multiple inductors connected in series or in parallel. The resonant capacitor module may be implemented by one capacitor, or may be implemented by multiple capacitors connected in series or in parallel, depending on an actual application environment. All implantations fall within the protection scope of the present disclosure. Moreover, each of the primary circuit 101 and the secondary circuit 102 is a single-phase bridge arm circuit (as shown in FIG. 5a) or a three-phase bridge arm circuit (as shown in FIG. 5b). Each switching transistor in the single-phase bridge arm circuit or three-phase bridge arm circuit has an anti-parallel diode or body diode. In a case where each of the primary circuit 101 and the secondary circuit 102 is the three-phase bridge arm circuit, arrangement of the transformer T and the resonant tank 103 between the primary circuit and the secondary circuit may be referred to the conventional technology. What shown in FIG. 5b is only one example and the arrangement is not limited thereto. That is, the bidirectional resonant direct-current converter may be implemented as a CLLC-type, LLC-type or SRC-type single-phase or three-phase resonant converter in the conventional technology. Detailed structures and connection relationships of the bidirectional resonant direct-current converter may be referred to the conventional technology and are not described in detail here.

As shown in FIG. 3 and FIG. 5a, regardless of the topology of the bidirectional resonant direct-current converter, the control circuit therefor includes a primary driving circuit 205, a secondary driving circuit 206, a zero-crossing detection circuit 202, a control module 201 and an input sampling circuit 203 and/or an output sampling circuit 204.

The input sampling circuit 203 is configured to sample an input electrical parameter of the bidirectional resonant direct-current converter, and the output sampling circuit 204 is configured to sample an output electrical parameter of the bidirectional resonant direct-current converter. In an embodiment, the input sampling circuit 203 is arranged on the direct-current side of the primary circuit 101, and has an output terminal connected to an input terminal of the control module 201. The input sampling circuit 203 is configured to sample an input current and an input voltage of the bidirectional resonant direct-current converter. The output sampling circuit 204 is arranged on the direct-current side of the secondary circuit 102, and has an output terminal connected to another input terminal of the control module 201. The output sampling circuit 204 is configured to sample an output current and an output voltage of the bidirectional resonant direct-current converter.

The zero-crossing detection circuit 202 is configured to detect zero-crossing information of the current flowing through the resonant tank 103, generate a zero-crossing signal in response to the zero-crossing information indicating that the secondary resonant current Is of the bidirectional resonant direct-current converter is zero, and output the zero-crossing signal to an input terminal of the control module 201. The zero-crossing information is information on whether the secondary resonant current Is and/or the primary resonant current Ip of the bidirectional resonant direct-current converter is zero. In practice, the zero-crossing detection circuit 202 determines a delay start point of each bridge arm in the secondary circuit 102 by detecting the zero-crossing point of the primary resonant current Ip and/or the secondary resonant current Is. If the transformer T has large magnetic inductance, a zero-crossing point of the primary resonant current is slightly different from a zero-crossing point of the secondary resonant current. In this case, only one side of the transformer T is provided with a detection circuit for zero-crossing detection, to save costs. In an embodiment, the zero-crossing detection is only performed on the secondary resonant current Is.

The control module 201 is configured to receive the zero-crossing signal and the input electrical parameter and/or the output electrical parameter, perform the control method for a bidirectional resonant direct-current converter according to any embodiment as above, turn on or off the switching transistors in the primary circuit 101 through the primary driving circuit 205, and turn on or off the switching transistors in the secondary circuit 102 through the secondary driving circuit 206. The process and principle of the control method may be referred to the above embodiments, and are not described in detail here.

With the control method, the control module 201 determines the switching frequency of the primary bridge arm and secondary bridge arm based on the input electrical parameter and/or output electrical parameter and an internal preset reference signal. The preset delay duration dt for the secondary rectifier bridge arm is a preset fixed value stored in the control module 201 or is obtained by searching a preset table. The driving control signal of the secondary rectifier bridge arm is determined based on the zero-crossing signal obtained by the zero-crossing detection circuit 202 and the preset delay duration dt. In a case where the switching frequency is greater than the resonant frequency, upon detecting commutation of the secondary resonant current Is, the control module 201 turns off a corresponding switching transistor in the secondary circuit immediately after the delay duration dt. After the switching transistor is turned off, the current is transferred to an anti-parallel diode or body diode of another switching transistor in a same bridge arm, and the another switching transistor in the same bridge arm is turned on at a zero voltage immediately after the dead time. The preset delay duration dt is less than a preset fixed value, so that each switching transistor in the primary circuit remains on at the zero voltage.

With the control circuit in this embodiment, resonance zero-crossing detection is performed on the bidirectional resonant direct-current converter combining with a delay duration control, thereby avoiding a problems of low-frequency oscillation due to a switching transistors, such as silicon MOSFET serving as a rectifier transistor, with a body diode having poor reverse recovery characteristic, and achieving soft switching of the switching transistors on the rectifier side. The control circuit in the present disclosure effectively reduces the flowing duration of the reverse current without drive, achieving a significant efficiency advantage in synchronous rectification applications of SiC devices and GaN devices.

The same and similar parts among the embodiments may be referred to each other. Each of the embodiments focuses on its differences from the other embodiments. The systems or system embodiments are essentially similar to the method embodiments, and therefore are described in brief. Reference may be made to the description of the method embodiments for relevant details of the system or system embodiments. The systems and system embodiments described above are only illustrative. The units described as separate components may or may not be physically separated. Components shown as units may or may not be a physical unit, that is, the components may be located at a same position or distributed over multiple network units. Some or all of the modules may be adopted as needed to achieve the objective of the solutions in the embodiments of the present disclosure. Those skilled in the art can understand and implement the embodiments without any creative effort.

Those skilled in the art may further understand that, units and algorithm steps described in conjunction with the embodiments disclosed herein may be realized by electronic hardware, computer software or a combination thereof. In order to clearly describe interchangeability of the hardware and the software, the composition and steps of each embodiment are generally described above based on functions. Whether a function is to be implemented by hardware or software depends on a particular application and a design constraint of the technical solutions. Those skilled in the art may implement the described functions through different methods for each specific application. Such implementation should not be considered going beyond the scope of the present disclosure.

For the above description of the disclosed embodiments, the features recorded in the embodiments in this specification may be replaced or combined with each other so as to enable those skilled in the art to implement or use the present disclosure. Various modifications to the embodiments are apparent to those skilled in the art, and the generic principles defined herein may be practiced in other embodiments without departing from the spirit or scope of the present disclosure. Therefore, the present disclosure is not to be limited to the embodiments shown herein but is conformed to the widest scope consistent with the principles and novel features disclosed herein.

## Claims

1. A control method for a bidirectional resonant direct-current converter, wherein the bidirectional resonant direct-current converter comprises a transformer, a primary circuit, a secondary circuit, and a resonant tank provided between the transformer and the primary circuit and/or the secondary circuit; each of the primary circuit and the secondary circuit is a single-phase bridge arm circuit or a three-phase bridge arm circuit, and switching transistors in the single-phase bridge arm circuit or switching transistors in the three-phase bridge arm circuit each provided with an anti-parallel diode or a body diode; and the control method comprises:
determining a zero-crossing point of a secondary resonant current of the bidirectional resonant direct-current converter;
determining, for a switching transistor to be turned off among the switching transistors in the secondary circuit within each half cycle of the secondary resonant current, a turn-off start time instant of the switching transistor as an end time instant of a preset delay duration starting from the zero-crossing point that is a start point of the half cycle; and
determining, for a switching transistor to be turned on among the switching transistors in the secondary circuit within each half cycle of the secondary resonant current, a turn-on start time instant of the switching transistor as an end time instant of a dead time starting from the turn-off start time instant of the switching transistor complementary to the switching transistor to be turned on.

2. The control method for a bidirectional resonant direct-current converter according to claim 1, wherein the preset delay duration is less than a preset fixed value, and each of the switching transistors in the primary circuit is turned on at a zero voltage.

3. The control method for a bidirectional resonant direct-current converter according to claim 2, wherein the preset fixed value is equal to 10% of a switching cycle of the switching transistors in the primary circuit and the secondary circuit.

4. The control method for a bidirectional resonant direct-current converter according to claim 1, wherein before the determining a zero-crossing point of a secondary resonant current of the bidirectional resonant direct-current converter, the control method further comprises:
obtaining an input electrical parameter and/or an output electrical parameter of the bidirectional resonant direct-current converter; and
determining the preset delay duration as a preset fixed value; or
determining the preset delay duration by searching a table based on at least one of the input electrical parameter or the output electrical parameter.

5. The control method for a bidirectional resonant direct-current converter according to claim 4, wherein before the determining a zero-crossing point of a secondary resonant current of the bidirectional resonant direct-current converter, the control method further comprises:
determining a switching frequency of the primary circuit and the secondary circuit based on the input electrical parameter and/or the output electrical parameter and a preset reference signal; and
generating a driving control signal of the primary circuit based on the switching frequency, and outputting the driving control signal of the primary circuit.

6. The control method for a bidirectional resonant direct-current converter according to claim 5, wherein after the determining a switching frequency of the primary circuit and the secondary circuit, the control method further comprises:
determining whether the switching frequency is greater than a resonant frequency of the resonant tank; and
processing, in response to the switching frequency being greater than the resonant frequency, the process of determining a zero-crossing point of a secondary resonant current of the bidirectional resonant direct-current converter.

7. The control method for a bidirectional resonant direct-current converter according to claim 6, wherein after the determining whether the switching frequency is greater than a resonant frequency of the resonant tank, the control method further comprises:
in response to the switching frequency being less than or equal to the resonant frequency,
processing the process of generating a driving control signal of the primary circuit based on the switching frequency, and outputting the driving control signal of the primary circuit; or
processing the process of determining a zero-crossing point of a secondary resonant current of the bidirectional resonant direct-current converter.

8. The control method for a bidirectional resonant direct-current converter according to any one of claims 1 to 7, wherein each of the primary circuit and the secondary circuit is the single-phase bridge arm circuit, a switching transistor of one half-bridge arm in a bridge arm is complementary to a switching transistor of the other half-bridge arm in the bridge arm, and switching transistors of half-bridge arms at different positions in different bridge arms are turned on or off simultaneously.

9. The control method for a bidirectional resonant direct-current converter according to any one of claims 1 to 7, wherein an input electrical parameter and/or an output electrical parameter comprises at least one of: an input current, an input voltage, an output current and an output voltage.

10. The control method for a bidirectional resonant direct-current converter according to claim 9, wherein the determining the preset delay duration by searching a table based on at least one of the input electrical parameter or the output electrical parameter comprises:
determining the preset delay duration based on the output current and the output voltage.

11. A control circuit for a bidirectional resonant direct-current converter, wherein the bidirectional resonant direct-current converter comprises a transformer, a primary circuit, a secondary circuit, and a resonant tank provided between the transformer and the primary circuit and/or the secondary circuit; each of the primary circuit and the secondary circuit is a single-phase bridge arm circuit or a three-phase bridge arm circuit, and switching transistors in the single-phase bridge arm circuit or switching transistors in the three-phase bridge arm circuit each provided with an anti-parallel diode or a body diode, and the control circuit comprises:
a primary driving circuit;
a secondary driving circuit;
a zero-crossing detection circuit;
a control module; and
an input sampling circuit and/or an output sampling circuit, wherein
the input sampling circuit is configured to sample an input electrical parameter of the bidirectional resonant direct-current converter,
the output sampling circuit is configured to sample an output electrical parameter of the bidirectional resonant direct-current converter;
the zero-crossing detection circuit is configured to detect whether a current flowing through the resonant tank crosses zero, and generate a zero-crossing signal; and
the control module is configured to receive the zero-crossing signal and the input electrical parameter and/or the output electrical parameter, perform the control method for a bidirectional resonant direct-current converter according to any one of claims 1 to 10, turn on or off the switching transistors in the primary circuit through the primary driving circuit, and turn on or off the switching transistors in the secondary circuit through the secondary driving circuit.

12. The control circuit for a bidirectional resonant direct-current converter according to claim 11, wherein for detecting whether a current flowing through the resonant tank crosses zero, the zero-crossing detection circuit is configured to:
determine the zero-crossing point of the secondary resonant current and/or whether a primary resonant current of the bidirectional resonant direct-current converter crosses zero.

13. The control circuit for a bidirectional resonant direct-current converter according to claim 11, wherein
the input sampling circuit is configured to sample an input current and an input voltage at a direct-current side of the primary circuit; and
the output sampling circuit is configured to sample an output current and an output voltage at a direct-current side of the secondary circuit.

14. The control circuit for a bidirectional resonant direct-current converter according to any one of claims 11 to 13, wherein the resonant tank comprises at least one resonant inductor module and at least one resonant capacitor module, wherein
the at least one resonant inductor module and the at least one resonant capacitor module are individually arranged on a primary side and a secondary side of the transformer or are both arranged on one side of the transformer, in response to the at least one resonant inductor module and the at least one resonant capacitor module each being in a quantity of one; and
the at least one resonant inductor module is arranged on both the primary side and the secondary side of the transformer, in response to the at least one resonant inductor module being in a quantity of more than one; and
the at least one resonant capacitor module is arranged on both the primary side and the secondary side of the transformer, in response to the at least one resonant capacitor module being in a quantity of more than one.
